# EUROPÄISCHE PATENTSCHRIFT

(11) **EP 1 032 197 B1**
(45) Veröffentlichungstag und Bekanntmachung des Hinweises auf die Patenterteilung: **14.05.2003**
(21) Anmeldenummer: 00103975.9
(22) Anmeldetag: 25.02.2000
(51) Int. Cl.: H04N 5/232

(54) **System zum Aufzeichnen und Wiedergeben von Videobildern**
System for recording and replaying of video images
Dispositif d'enregistrement et de reproduction des images vidéo

(30) Priorität: 26.02.1999 DE 19910147
(43) Veröffentlichungstag der Anmeldung: 30.08.2000
(73) Patentinhaber: Stahl, Michael, 81243 München (DE)
(72) Erfinder: Stahl, Michael, 81243 München (DE)
(74) Vertreter: Fritsche, Rainer, Dipl.-Wirtsch.-Ing.

(56) Entgegenhaltungen:
- EP-A- 0 462 905
- WO-A-95/32483
- WO-A-96/24216
- US-A- 5 200 818
- SHENCHANG ERIC CHEN: "QUICKTIME VR - AN IMAGE-BASED APPROACH TO VIRTUAL ENVIRONMENT NAVIGATION" COMPUTER GRAPHICS PROCEEDINGS (SIGGRAPH),US,NEW YORK, IEEE, 6. August 1995 (1995-08-06), Seiten 29-38, XP000546213 ISBN: 0-89791-701-4

## Beschreibung

Die Erfindung betrifft ein System zum Aufzeichnen von Bildern aus Einzelbild- oder Videosequenzen und deren Wiedergabe in einem digital bewegbaren Videobild-System sowie ein Verfahren hierzu.

Es sind Computerspiele bekannt, bei welchen Personen, Tiere, Flugkörper und/oder Fahrzeuge auf einem Bildschirm in einer speziell entworfenen, virtuellen Welt bewegbar sind und dabei mittels einer Computermaus oder einem Joystick über den Computer zum Agieren entsprechend des Spielregimes angesteuert werden.

Darüberhinaus ist unter dem Namen Quicktime VR-Panorama ein System zur Darstellung eines realen Panoramabildes bekannt, das durch eine einzelne, drehbar angeordnete Kamera aufgenommen wird. Es erfolgt bei einer Drehung der Kamera um 360° das Aufnehmen von Einzelbildern, welche nachfolgend zu dem gesamten Panorama zusammengezogen bzw. zusammengefügt werden. Das Quicktime VR-Panorama System wird in unterschiedlichen Modifikationen durch den Handel vertrieben und bietet teilweise die Möglichkeit, die von mehreren Aufnahmepunkten aufgenommenen Bilder miteinander zu verknüpfen. Bei der Bildwiedergabe ist jedoch eine gleichförmige, flüssige Bewegung beim Wechsel von einem Panoramabild mit einem ersten Aufnahmeort zu einem weiteren Panoramabild mit einem zweiten Aufnahmeort nicht möglich.

Die bekannten Systeme weisen darüberhinaus insbesondere den Nachteil auf, daß man sich (als Betrachter) bei der Bildwiedergabe innerhalb der dargestellten Bilder lediglich drehen und gegebenenfalls springend geradlinig bewegen kann. Eine frei wählbare, gleichförmige Bewegung, bei welcher ein übergangsloser Wechsel von einer Drehbewegung in eine Linearbewegung und umgekehrt innerhalb der durch diese Systeme darstellbaren Bilder erfolgen kann, ist jedoch nicht realisierbar.

WO-A-9624216 beschreibt, daß Bilder mit Ortskennung und Kamerastellung aufgezeichnet und entsprechend der Eingabedaten eines Benutzers widergegeben werden.

Ausgehend von den Mängeln des Standes der Technik liegt der Erfindung deshalb die Aufgabe zugrunde, ein System der eingangs genannten Art anzugeben, mit welchem bei der digitalen Bildwiedergabe eine solche Wiedergabe von Bildansichten ausführbar ist, daß einem Betrachter eine zusammengesetzte Bewegung aus einer frei wählbaren Kombination von Dreh- und Richtungsbewegungen innerhalb von Realbildern möglich ist. Es ist gleichzeitig Aufgabe der Erfindung ein Verfahren zum Aufnehmen und Wiedergeben von Bildern aus Videosequenzen zur Darstellung in einem digitalen Bildsystem sowie die dazu erforderlichen Vorrichtungen anzugeben.

Die obengenannten Aufgaben werden durch die Merkmale der Ansprüche 1, 3, 4 und 7 gelöst. In den sich daran anschließenden Ansprüchen 2, 5, 6 und 8 bis 10 finden sich vorteilhafte Ausgestaltungen hierzu.

Die Erfindung besteht in ihrem Grundgedanken in der Verknüpfung von aufgezeichneten Videobildern mit Blickwinkelinformationen und geographischen Ortsinformationen pro Aufnahmeort. Durch Konvertierung der aufgezeichneten Videobilder, der Blickwinkel- und geographischen Ortsinformationen in digitale Daten und Verknüpfung der Daten, vorzugsweise in einen Datensatz, besteht die Möglichkeit, bei der digitalen Wiedergabe der Bilddaten dem Benutzer zumindest eine Bewegung vorwärts und rückwärts sowie eine beliebige Drehung innerhalb der wiedergegebenen Bilder zu ermöglichen.

Die Erfindung schließt die Erkenntnis ein, daß mit den gegenwärtig für die elektronische Datenverarbeitung verfügbaren Prozessoren auch bei einer Verwaltung von sehr großen Datenmengen solche Arbeitsgeschwindigkeiten realisierbar sind, daß bei der Wiedergabe eines vorzugsweise videotechnisch aufgezeichneten Systems von Bildern von einem real existierenden Raum und einer Bewegung darin für den Betrachter keine als störend empfundenen Zeitverluste entstehen.

Damit ist in vorteilhafter Weise eine Möglichkeit gegeben, sich virtuell und mit einer freiwählbaren Geschwindigkeit in diesem Bildsystem des digitalisierten Raumes in Kombination geradlinig und/oder unter Ausführung einer beliebigen Drehung zu bewegen und die sich dabei aus den verschiedensten Blickwinkeln für den Betrachter ergebenden Ansichten als Videobild auf einer Bildwiedergabe-Einrichtung darzustellen. Die virtuelle Fortbewegung des Betrachters innerhalb eines gezeigten realen Bildes - und damit verbunden eine Steuerung des Zugriffs auf die einzelnen gespeicherten Daten der Bilder der Videosequenzen zur Bilddarstellung unter dem veränderten Blickwinkel - kann durch eine externe, als Positionsgeber ausgebildete Eingabe-Einheit, beispielsweise mittels einer Computermaus bzw. der Tastatur des Computers, mit einem Joystick bzw. Joypad oder mit einer Fernbedienung für digitale Videogeräte, beispielsweise einem DVD-Player, erfolgen.

Das System zur Aufnahme und Wiedergabe von Videobildern zur Darstellung eines digitalen, bewegbaren Videobild-Systems weist eine Bildaufzeichnungsvorrichtung und eine Bildwiedergabevorrichtung zur Wiedergabe von mittels der Bildaufzeichnungsvorrichtung aufgezeichneten und gespeicherten Bilddaten auf.

Entsprechend der bevorzugten Ausführungsform der Erfindung ist für die Bildaufzeichnungsvorrichtung ein, insbesondere mit einer im wesentlichen konstanten Geschwindigkeit, verfahrbares Kamera-System vorgesehen, mit welchem erfindungsgemäß ein Aufzeichnen der Videobilder an unterschiedlichen, jeweils nacheinander einzunehmenden Standorten derart erfolgt, daß durch vorzugsweise eine einzelne, drehbar angeordnete Kamera nacheinander eine Vielzahl von realen Einzelbildern mit jeweils unterschiedlichem Blickwinkel aufgenommen werden. Die Bildaufzeichnungsvorrichtung enthält darüberhinaus erfindungsgemäß eine Zuordnungs-Einheit, in welcher den Daten eines jeden aufgezeichneten Bildes der Videosequenzen pro Aufnahmestandort eine dem jeweiligen Standort entsprechende Ortskoordinaten-Kennung und eine der jeweiligen Stellung insbesondere Winkelstellung des Kamera-Systems an diesem Standort entsprechende Blickwinkel-Kennung zugeordnet wird, eine Speicher-Einheit, in welcher die mit einer geographischen Ortskoordinaten- und Blickwinkel-Kennung versehenen Daten der aufgezeichneten Bilder eingespeichert werden, und ein die Zuordnungs-Einheit und die Speicher-Einheit steuerndes Datenbank-System zur strukturierten Verwaltung der die aufgezeichneten Bilder der Videosequenzen enthaltenden Daten.

Die Bildaufzeichnungsvorrichtung kann ein Kamera-System zur Aufzeichnung von Video-Sequenzen und ein mit dem Datenausgang des Kamera-Systems verbundenen Steuerrechner zur Verarbeitung der Bilddaten der aufgezeichneten Video-Sequenzen mit einer Zuordnungs-Einheit, in welcher Mittel vorgesehen sind, die jedem aufgezeichneten Bild eine dem Standort entsprechende Ortskoordinaten-Kennung und eine dem Blickwinkel des Kamera-Systems an diesem Standort entsprechende Blickwinkel-Kennung zuordnen, mit einer Speicher-Einheit zum strukturierten Speichern der Bilddaten der Videosequenzen unter insbesondere der Berücksichtigung der Ortskoordinaten- und Blickwinkel-Kennung, und mit einem die Zuordnungs-Einheit und die Speicher-Einheit steuernden Datenbank-System zur Organisation einer strukturierten Verwaltung und Speicherung der Bilddaten der Videosequenzen enthalten.

Zur Ermittlung der geographischen Ortskoordinaten des Kamera-Systems kann beispielsweise eine GPS-Vorrichtung eingesetzt werden, die vorzugsweise selbständig fortlaufend die Ortskoordinaten des Kamera-Systems ermittelt und die so ermittelten Daten an die Zuordnungs-Einheit übermittelt.

Nach einer günstigen Weiterbildung der Erfindung weist die Bildaufzeichnungsvorrichtung ein Kamera-System mit mehreren, bevorzugt zwölf, weiter bevorzugt vierundzwanzig Videokameras (Mehrkamera-System) auf, welche feststehend vorzugsweise auf einem Kreisbogen mit in Umfangsrichtung gleichem Abstand zueinander angeordnet sind. Die Bildaufzeichnungsvorrichtung wird linear bzw. geradlinig und mit vorzugsweise konstanter Geschwindigkeit insbesondere mittels eines Antriebs bewegt, wobei die Kameras an jedem erreichten Standort gleichzeitig Realbilder mit einem jeweils unterschiedlichen Blickwinkel aufnehmen. Anstelle von mehreren Kameras mit Normalobjektiv kann auch eine demgegenüber reduzierte Zahl von Kameras mit Weitwinkelobjektiven bishin zu einer Kamera mit einem Panoramaobjektiv verwendet werden.

Weiterhin kann vorgesehen sein, daß bei dem Mehrkamera-System die Kameras nicht nur in einer vorzugsweise horizontalen Ebene auf einem Kreisbogen angeordnet sind, sondern auch räumlich verteilt positioniert sind. Insbesondere wird hierbei angestrebt, die Kameras so anzuordnen, daß der Blickwinkel jeder Kamera Teil einer Kugel ist, d. h. der Blickwinkel einer Kamera bildet ein Kugelsegment einer gedachten Kugel, die die Kameras umhüllt. Hierdurch besteht die Möglichkeit, die Blickrichtung bei der Wiedergabe der Daten der Bilder der Videosequenzen nicht nur in einer horizontalen Ebene zu verändern, sondern auch beispielsweise eine Blickrichtung nach oben und unten einzunehmen.

Um einen großen Raum in Bildern zu erfassen und/oder um eine Bewegung in beliebiger Richtung innerhalb des Raumes, insbesondere eine Diagonalbewegung zu ermöglichen, kann weiterhin vorgesehen sein, daß die Bildaufzeichnungsvorrichtung bzw. das Kamera-System in diesem Raum unterhalb entlang paralleler Streifen bei der Aufzeichnung geführt wird.

Die Bildwiedergabevorrichtung weist entsprechend der bevorzugten Ausführungsform der Erfindung eine Eingabe-Einheit zum Wählen bzw. Verändern eines Standortes und/oder eines Blickwinkels zwecks Bildwiedergabe bzw. zwecks Wiedergabe der Daten der Bilder aus der mittels der Bildaufzeichnungsvorrichtung aufgezeichneten und als Videosequenzen gespeicherten Daten bzw. Bilddaten auf. Darüberhinaus sind eine Zuordnungs-Einheit, eine Speicher-Einheit, ein die Zuordnungs-Einheit steuernden und das Auslesen der Bilddaten der jeweiligen Videosequenz aus der Speicher-Einheit koordinierendes Datenbank-System sowie eine Bildwiedergabe-Einrichtung zur Darstellung der mittels der Eingabe-Einheit bestimmten und aus der Speicher-Einheit ausgelesenen Bilddaten der jeweiligen Videosequenz vorgesehen.

Die Bildwiedergabevorrichtung kann eine Eingabe-Einheit zur Erzeugung eines einem wählbaren Standort und einem auf diesen Standort bezogenenen Blickwinkel entsprechenden Eingabesignals zwecks Auslösung einer standort- und blickwinkelbezogenen Bildwiedergabe und einen mit dem Signalausgang der Eingabe-Einheit verbundenen Steuerrechner zur Verarbeitung der Daten des von der Eingabe-Einheit abgegebenen Eingabesignals mit einem Datenbank-System zum Steuern der Bereitstellung der strukturiert gespeicherten Bilddaten bei der standort- und blickwinkelbezogenen Bildwiedergabe, mit einer Zuordnungs-Einheit, mittels der jede gewählte Standort- und Blickwinkel-Eingabe mit den durch das Datenbank-System verfügbaren, diesbezüglichen Kennungsdaten verglichen und der dazugehörige Speicherplatz für die Bilddaten der entsprechenden Videosequenz ermittelt werden, und mit einer Speicher-Einheit zum Auslesen der mit der gewählten Standort- und Blickwinkel-Eingabe entsprechend des Datenbank-Systems versehenen Daten der Bilder der Bildsequenzen und eine mit dem Signalausgang der Speicher-Einheit verbundene Bildwiedergabe-Einrichtung zur Darstellung des Bildsystems entsprechend des mittels der Eingabe-Einheit wählbaren Standortes und/oder Blickwinkels enthalten.

Aus der Speicher-Einheit sind die unter Berücksichtigung der Ortskoordinaten- und Blickwinkel-Kennung strukturiert gespeicherten Daten der aufgezeichneten Bilder dann auf einfache Weise auslesbar, wenn über die Zuordnungs-Einheit die zu den mit der Eingabe-Einheit eingegebenen Ortskoordinaten- und Blickwinkel-Eingaben der Speicherplatz für die Bilddaten in der entsprechenden Videosequenz in der Speicher-Einheit ermittelt worden ist.

Die Zuordnungs-Einheit und die Speicher-Einheit bilden in der Bildaufzeichnungsvorrichtung und in der Bildwiedergabevorrichtung erfindungsgemäß einen Steuerrechner, in welchen die Bilddaten nach Art eines Datenbank-Systems verwaltet werden. Entsprechend der Software des Datenbank-Systems sind die Bilddaten der einzelnen Videosequenzen strukturiert speicherbar und können zur standort- und blickwinkelabhängigen Bildwiedergabe in einem digitalen, bewegbaren Videobild-System bei Bedarf ausgelesen werden.

Da sich Ort und Zeitpunkt der Bildaufzeichnung für das Bildsystem und der Bildwiedergabe in der überwiegenden Zahl der Fälle unterscheiden, ist es günstig, wenn in den Speicher-Einheiten Mittel zum Datenein- und Datenaustrag auf einen bzw. von einem, ein vorzugsweise nicht-lineares Speichermedium aufweisenden, insbesondere mobilen Datenträger vorgesehen sind. Die Bilddaten der Videosequenzen werden auf dem aus der Speicher-Einheit der Bildaufzeichnungsvorrichtung entnehmbaren Bilddatenträger abgespeichert, welcher bei Bedarf in die Speicher-Einheit der Bildwiedergabevorrichtung eingesetzt werden kann. Für den Bilddatenträger bzw. Datenträger ist entsprechend der bevorzugten Ausführungsform eine CD-ROM oder ein DVD-Aufzeichnungsträger als nichtlineares Speichermedium vorgesehen. Ebenso kann auch ein Video-Server, ein Netzwerk-Server oder ein Internet-Server als Speichermedium verwendet werden.

Das System zur Aufnahme und Wiedergabe von Videobildern zur Darstellung eines digitalen, bewegbaren Videobild-Systems ist darüberhinaus besonders praktikabel, wenn für die Bildaufzeichnungsvorrichtung und für die Bildwiedergabevorrichtung das gleiche Datenbank-System zur Verwaltung der Bilddaten zum Einsatz kommt.

Für die mit dem Steuerrechner gekoppelte Eingabe-Einheit kann in vorteilhafter Weise eine Computermaus, ein Joystick oder eine handelsübliche Fernbedienung für ein DVD-Abspielgerät eingesetzt werden. Als Bildwiedergabe-Einrichtung ist ein normaler Fernsehbildschirm bzw. ein Computermonitor ausreichend.

Nach dem erfindungsgemäßen Verfahren wird das Aufnehmen der realen Videobilder durch ein Kamera-System vorgenommen, welches sich durch das aufzunehmende Gebiet, beispielsweise verschiedene Räume in einem Gebäude oder Verkehrswege in einer Ortschaft, mit einer im wesentlichen konstanten Geschwindigkeit bewegt. Durch das Kamera-System werden an jeder erreichten Position alle Bilder aufgezeichnet, welche eine lückenlose Drehung um 360° erfordert. Die derart aufgenommenen Videosequenzen werden in einem Datenspeicher einer Rechner-Einheit strukturiert gespeichert und in Form einer Datenbank verwaltet. Ebenso können die Einzelbilder durch beispielsweise eine geeignete Software zu einem Panoramabild über einen vorgegebenen Winkel (z.B. 360°) zusammengefügt und hieraus eine Videosequenz erstellt werden.

Um eine Verzerrung bei der Bildwiedergabe infolge einer ungleichmäßigen Bewegungsgeschwindigkeit des Kamera-Systems bei der Aufnahme zu vermeiden, muß eine Zuordnung eines aufgezeichneten Bildes der Videosequenz genau zu dem zugehörigen Ort erfolgen. Dies kann dadurch geschehen, daß zu Beginn der Aufnahme eine Soll-Geschwindigkeit für die Bewegung des Kamera-Systems eingegeben wird, deren Einhaltung von einem Soll-/Ist-Vergleicher überwacht wird. Je nach Größe der durch den Soll-/Ist-Vergleicher erfaßten Abweichung von der vorgegebenen Soll-Geschwindigkeit wird vorzugsweise mittels eines Programms die Ablage der Bilddaten in einem Speicher gesteuert bzw. die Ungleichmäßigkeit in der Bewegungsgeschwindigkeit beim Aufnehmen kompensiert.

Ebenso besteht die Möglichkeit, jedes Bild mit den zugehörigen Positionsdaten, Blickwinkeldaten und Geschwindigkeitsdaten abzulegen. Durch diese Verknüpfung kann bei der Wiedergabe jede Abweichung von der Soll-Geschwindigkeit bzw. gewünschten Geschwindigkeit beim Aufzeichnen der Videosequenzen ausgeglichen werden. Dies kann beispielsweise dadurch geschehen, daß die Geschwindigkeit parallel erfaßt und aufgezeichnet wird, beispielsweise auf der mitlaufenden Tonspur. Beim Abspeichern werden diese Daten zu einem Datensatz für den Aufzeichnungsort (Bildort) verknüpft.

Die strukturierte Speicherung der Videosequenzen erfolgt entsprechend der bevorzugten Ausführungsform der Erfindung derart, daß jedem Bild eine Kennung mit Positions- und Blickwinkelkoordinaten zugeordnet wird, welche der jeweiligen Position der entsprechenden Kamera des Mehrkamera-Systems bzw. der einzelnen Videokamera bei der Aufnahme entspricht. Zur Wiedergabe einer gewünschten, durch die Kameras eines Mehrkamera-Systems aufgenommenen Videosequenz bzw. der Daten der aufgezeichneten Bilder einer Videosequenz wird nach Eingabe einer bestimmten Positions- und Blickwinkelkoordinate mittels eines Positionsgebers das jeweilige Videobild durch das Datenbanksystem ermittelt, aus dem zentralen Datenspeicher der Rechner-Einheit bzw. des Steuerrechners ausgelesen und auf einer Bildwiedergabe-Einrichtung dargestellt. Bei einer durch den Positionsgeber erzeugten Änderung des Blickwinkels, d.h., wenn sich der Betrachter an einem durch die Ortskoordinate bestimmten Standort virtuell dreht, wird in der Datenbank auf die Daten der Bilder einer von der jeweils benachbart angeordneten Kamera des Mehrkamera-Systems aufgenommenen Videosequenz zugegriffen. Darüber hinaus kann bei einem Panoramabild, das aus Einzelbildern zusammengefügt ist, die Drehung durch Vorbeilauf des sichtbaren Ausschnitts dieses zusammengefügten Panoramabildes bewirkt werden. Der Dateninhalt des entsprechenden Speicherplatzes im zentralen Datenspeicher der Rechner-Einheit wird ausgelesen und auf der Bildwiedergabe-Einrichtung dargestellt. In dieser Art und Weise ist eine Darstellung von Bildern der Videosequenzen möglich, welche ein virtueller Betrachter erkennt, wenn er sich gleichförmig und in Kombination mit gleichzeitiger Drehung durch das zuvor von dem Mehrkamera-System aufgenommene Gebiet bewegen würde.

Bei Bewegung beispielsweise durch Räume kann die Situation auftreten, daß neben der Bewegungsmöglichkeit vor, zurück und Drehen um die eigene Achse ein Abbiegen notwendig oder möglich ist. Um bei der Bildwiedergabe auch ein derartiges virtuelles Abbiegen zu ermöglichen, kann weiterhin vorgesehen sein, daß diejenigen Bilddaten, die an einem Abbiegepunkt aufgenommen werden mit einer Kennung, insbesondere einem Flag versehen werden, der diese Daten als Daten einer Abbiegemöglichkeit kennzeichnet. Durch unmittelbares Aufrufen dieses Flags oder durch Aufrufen innerhalb einer Bewegung der Eingabe-Einheit bei Erreichen dieser Abbiegestelle wird dem Nutzer die Möglichkeit geboten, an dieser Stelle abzubiegen und die sich hieran anschließenden Videosequenzen zu betrachten.

Weiterhin besteht bei der Wiedergabe der Videosequenzen die Möglichkeit, sämtliche Bilddaten aller Kameras oder zumindest von Kameras eines bestimmten Abschnitts gleichzeitig zu laden und zu einem Bild zusammenzufügen, so daß bei einer Bewegung des Benutzers des digitalen Bildsystems die Nachladezeit und damit insbesondere Brüche innerhalb der Bilder vermieden werden. Bewegt sich beispielsweise der Benutzer in eine Richtung und möchte dabei virtuell den "Kopf" drehen, so wird durch das gleichzeitige Laden der Bilddaten der beiden Kameras, die links und rechts von derjenigen Kamera angeordnet sind, deren Bilder gerade betrachtet worden sind, ein flüssiger und gleichmäßiger Übergang von den Bilddaten einer Kamera zu der nächsten Kamera ermöglicht. Darüber hinaus besteht die Möglichkeit, daß bei Beginn einer Schwenkbewegung, d. h. der Übergang von den Bilddaten einer Kamera zu den Bilddaten einer benachbarten Kamera die Bilddaten der nächstfolgenden Kamera in diese Richtung bereits ebenfalls geladen werden, um den gleichmäßigen Übergang bei Fortsetzung der Schwenkbewegung zu ermöglichen.

Häufig besteht der Bedarf, nicht nur vorwärts, rückwärts und eine Drehbewegung innerhalb eines Raumes auszuführen, sondern beispielsweise sich auch diagonal zu bewegen. Um dies zu bewerkstelligen, kann weiterhin vorgesehen sein, daß die Bilddaten einer Kamera, die gerade wiedergegeben worden sind, zu Beginn der Diagonalbewegung mittels einer geeigneten Software gezoomt werden (was die Diagonalbewegung simuliert) und nach Feststellen eines vorbestimmten Kriteriums zu den Bilddaten gesprungen wird, die bei Erreichen der Endposition der Diagonalbewegung bei einer virtuellen Bewegung entlang der Bilddaten, die durch parallele Bewegung der ersten Bilddatenaufzeichnungsbewegung aufgezeichnet worden sind, erreicht worden wäre.

Entsprechend der bevorzugten Ausführungsform der Erfindung werden die von der oder den Kameras des Kamera- bzw. Bild-Systems aufgenommen Videosequenzen bzw. Bildinformationen vorzugsweise beim Speichern zu einer einzigen Videodatei zusammengefügt. Dadurch ist auf einfache und zugleich vorteilhafte Weise gesichert, daß beim Abrufen der Bilddaten von nicht benachbarten Einzelbildern keine neue Videodatei geöffnet werden muß bzw. keine Sprünge zwischen Dateien erforderlich werden. Diese Form des Speicherns ermöglicht bei der Wiedergabe von Bildern des digitalen Bildsystems einen so schnellen Zugriff auf die zur Bilddarstellung notwendigen Daten, daß ein merklicher Zeitverlust ausgeschlossen werden kann.

Um bei der Bildwiedergabe in der Datenbankverwaltung einen sicheren Zugriff auf die jeweiligen Bilddaten zu erreichen, werden in das Datensegment eines bestimmten Bildes zusätzlich die Positionsdaten der von der in Umfangsrichtung jeweils nächstliegenden Kamera des Mehrkamera-Systems aufgenommenen Nachbarbilder aufgenommen. Dadurch ist jedes Bild mit seinen "logischen" Nachbarbildern direkt kombinierbar bzw. zu jedem Bild sind die Positionen der "logischen" Nachbarbilder rekonstruierbar.

Es können also die der Position des logischen Nachbarbildes entsprechenden Daten gemeinsam mit dem Einzelbild abgespeichert werden. Hierbei besteht die Möglichkeit, daß der Positionswert im Bildcode des jeweiligen Einzelbildes abgespeichert wird. Weiterhin besteht die Möglichkeit, daß die der Position des logischen Nachbarbildes entsprechenden Daten in einer gesonderten Datei abgespeichert werden, wobei bei der Wiedergabe der Bilddaten die Wiedergabe eines Bildes pro Ort durch diese gesonderte Datei verfolgt oder parallel geführt wird, so daß anhand dieser gesonderten Datei die logischen Nachbarbilder eines Bildes pro Aufnahmeort unmittelbar anfragbar sind.

Entsprechend der bevorzugten Ausführungsform der Erfindung werden sämtliche "logische" Nachbarpositionen im Bildcode des Bilddatensegments abgespeichert. Bei einem Steuerungseingriff eines das digitale Bildsystem betrachtenden Nutzers zur virtuellen Änderung seines augenblicklichen Standorts durch eine Verschiebung und/oder eine Drehung wird die Position des der Standortänderung entsprechenden neuen Bilddatensegments in der gespeicherten Gesamtdatei aus der Kodierung des "alten" Bilddatensegments ermittelt und dieses neue Bild anschließend dargestellt.

Im Falle eines größeren Raumes, der eine Aufzeichnung nicht nur in einer einzigen Linearbewegung mit jeweils Aufzeichnung um 360° erfordert, sondern mehrfaches Durchlaufen des Rahmens in parallelen Linearbewegungen benötigt, kann durch die Erfindung bei der Wiedergabe nicht nur eine virtuelle Vorwärts-Rückwärts-Bewegung (sowie Drehung), sondern auch eine Bewegung nach links und rechts (oder diagonal) ermöglicht werden. Dies kann dadurch erfolgen, daß die Bilddaten, Ortsund Blickwinkeldaten sowie ggf. Geschwindigkeitsdaten der Linearbewegungen entlang der parallelen Streifen jeweils getrennt abgespeichert werden und eine Verknüpfung zwischen den Daten zweier benachbarter Aufnahmestreifen bzgl. des jeweils in gleicher Höhe befindlichen Aufnahmeortes erfolgt. Ist die Bewegungsgeschwindigkeit entlang jedes Aufnahmestreifens jedesmal exakt gleich, so entspricht die Speicheradresse eines Aufnahmeortes in einem Aufnahmestreifens der Speicheradresse des zugehörigen Aufnahmeortes in dem benachbarten Aufnahmestreifens. Dabei können die Speicheradressen der benachbarten Aufnahmeorte jeweils mit den Bilddaten oder in einen externen Speicher abgespeichert werden. Ebenso können die Positions- bzw. Ortsdaten der zugehörigen Aufnahmeorte in den benachbarten Aufnahmestreifen mit den Bilddaten eines Aufnahmeortes abgespeichert werden. Hierdurch können Unterschiede in den Bewegungsgeschwindigkeiten bei der Aufnahme in den jeweiligen Aufnahmestreifen ausgeglichen werden.

Nach einer günstigen Weiterbildung der Erfindung ist es auch möglich, eine gesonderte Speicherkapazität zu bilden, in welcher die Positionsdaten der "logischen" Nachbarbilder in der Videodatei aller aufgezeichneten Videosequenzen extern, d.h. in einer von der Videodatei gesonderten Datei, speicherbar sind. Liegen alle gleichlarigen Teilsequenzen hintereinander in der Videodatei, so können die Sequenzpositionen mit der entsprechenden Kameraposition benannt und abgespeichert werden. Bei einem Steuerungseingriff eines Nutzers des digitalen, bewegbaren Bildsystems wird zunächst - durch Standard-Software gesichert - die Bildnummer abgefragt. Danach wird die Position des Bildes in der aktuellen Teilsequenz ermittelt und hieraus über den externen Datensatz mit den Positionsdaten der "logischen" Nachbarbilder die absolute Position des neuen Bildes rekonstruiert.

Hierbei sind entsprechend einer vorteilhaften Variante des erfindungsgemäßen Verfahrens auch relative Bereichsangaben möglich, die eine Kombination von Bildern aus unterschiedlich langen Teilsequenzen gestatten. So läßt sich ein digitalisierter Raum auch mit einer extrem geringen Anzahl von Videokameras erzeugen, wenn die Bewegung der Videokamera auf einer bestimmten Wegstrecke in dem zu erfassenden Gebiet mehrfach bei jeweils einer anderen Kameraposition durchgeführt wird. Die einzelnen Teilsequenzen, welche durch die Videokamera bei jeweils unterschiedlicher Winkelstellung aufgenommen werden und dadurch nur einen im Blickwinkel reduzierten Ausschnitt des Gesamtbildes erfassen, können dabei eine unterschiedliche Länge aufweisen, da bei der Bewegung des Mehrkamera-Systems Abweichungen in der Geschwindigkeit nicht auszuschließen sind. Durch Aufzeichnung der Bewegungsgeschwindigkeit beim Aufnehmen der einzelnen Teilsequenzen und einen programmtechnischen Abgleich zwischen den einzelnen Teilsequenzen unter Berücksichtigung der unterschiedlichen Geschwindigkeiten kann eine unmittelbare Verknüpfung des Bildes einer Teilsequenz mit dem einer weiteren "benachbarten" Teilsequenz erzielt werden. Das Abspeichern der Teilsequenzen und die Bildwiedergabe erfolgt in der vorstehend beschriebenen Art und Weise.

Die virtuelle Navigation in einem real existierenden und nach dem erfindungsgemäßen Verfahren in digitalisierter Form dargestellten Raum läßt sich in vorteilhafter Weise in einer Vielzahl von Anwendungsbereichen einsetzen. So kann das erfindungsgemäß digitalisierte Bildsystem für die Visualisierung des Angebots von Reisebüros, beispielsweise Rundfahrten in bekannten Weltstädten, für verschiedene Lernanwendungen, beispielsweise die Darstellung von Verkehrssituationen bei einer Fahrschulausbildung oder die Darstellung der Räumlichkeiten in einem unzugänglichen Gebäude zum Fluchtwegtraining in einem Kernkraftwerk bzw. für eine Dokumentarisierung von zum Abriß vorgesehenen Gebäuden verwendet werden.

Darüberhinaus sind mit dem erfindungsgemäßen System auch Bilddarstellungen möglich, bei welchen aufgezeichnete Videobilder in Kombination mit virtuellen Objekten wiedergegeben werden. So ist synchron zur Bewegung der Figur eines Computerspiels der real existierende Raum virtuell bewegbar, d.h. es können beispielsweise virtuelle Rennwagen über den Nürburg-Ring bewegt werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.
Es zeigen:
- Fig. 1: das Blockschaltbild der bevorzugten Ausführungsform einer Bildaufzeichnungsvorrichtung zur Durchführung des erfindungsgemäßen Verfahrens,
- Fig. 2: das Blockschaltbild einer bevorzugten Ausführungsform einer Bildwiedergabevorrichtung zur Durchführung des erfindungsgemäßen Verfahrens,
- Fig. 3: eine vorteilhafte Weiterbildung der in Figur 1 gezeigten Ausführungsform der Erfindung,
- Fig. 4: eine schematische Darstellung des Dateninhalts einer Videodatei für die Bildaufzeichnung nach dem erfindungsgemäßen Verfahren, sowie
- Fig. 5: eine bevorzugte Darstellungsform bei der Wiedergabe eines Bildes aus einem nach dem erfindungsgemäßen Verfahren erzeugten Bildsystem.

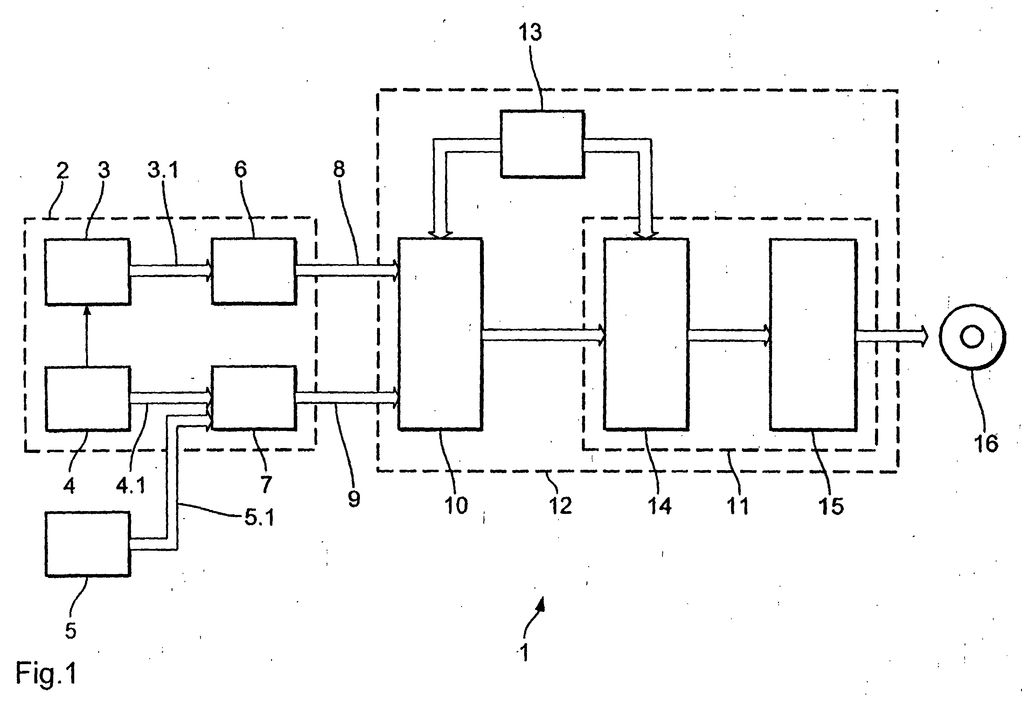

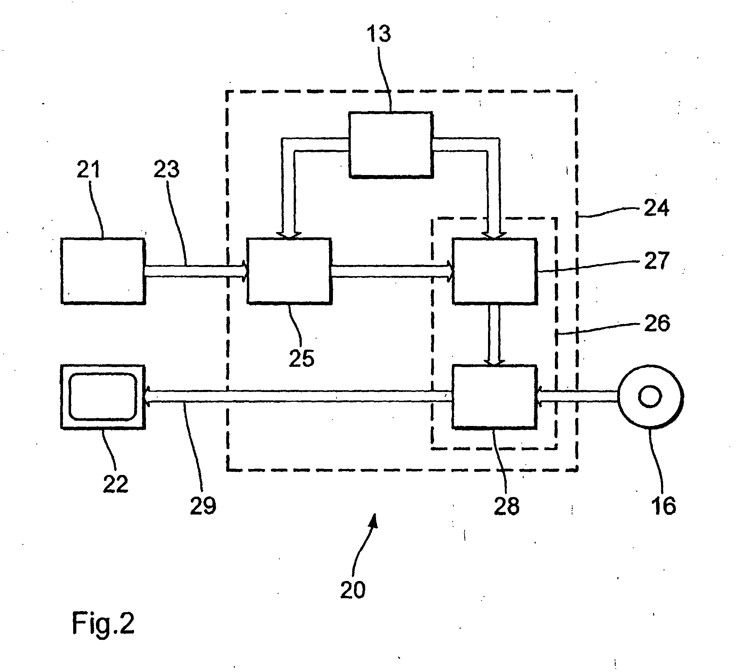

Das erfindungsgemäße System zum Aufzeichnen und Wiedergeben von Videobildem zwecks Darstellung eines digitalen, bewegbaren Videobild-Systems weist eine Bildaufzeichnungs- bzw. Bildaufnahmevorrichtung 1 und eine Bildwiedergabevorrichtung 20 auf, welche in den Figuren 1 und 2 dargestellt sind und an deren Funktionsweise das erfindungsgemäße Verfahren näher erläutert wird.

Das Kamera-System 2 der Bildaufzeichnungsvorrichtung 1 gemäß Figur 1 weist ein einzelne Videokamera 3, welche durch einen ersten Motorantrieb 4 in Rotation versetzt werden kann. An einem bestimmten Standort wird durch die Videokamera 3 eine Rundumansicht als Videosequenz mit einer Vielzahl von Einzelbildern aufgezeichnet. Die entsprechenden Daten 3.1 werden in dem Bildspeicher 6 der Videokamera 3 zwischengespeichert. Durch einen zweiten Motorantrieb 5 wird die gesamte Bildaufzeichnungsvorrichtung 1 bei rotierender und gleichzeitig bildaufzeichnender Videokamera längs einer bestimmten Wegstrecke S verfahren. Die Kamera wird entweder schrittweise - jeweils nach einer Rotation der Kamera um 360° - oder bei sehr schnellem Rotieren mit konstanter Geschwindigkeit entlang der Strecke S bewegt werden.

Dabei werden die Bilddaten 3.1 und alle Strecken- bzw. Blickwinkeldaten 5.1 bzw. 4.1 in dem Bildspeicher 6 bzw. einem Positionsdatenspeicher 7 zwischengespeichert. Mit Streckendaten 5.1 sind die geographischen Daten eines Aufnahmeortes in der Realität gemeint.

Die Datenausgänge 8 und 9 der Zwischenspeicher 6 und 7 sind mit einer Zuordnungs-Einheit 10 verbunden, welche zusammen mit einer Speicher-Einheit 11 einen Steuerrechner 12 bildet. Die Software des Steuerrechners 12 beeinhaltet ein Datenbank-System 13, mit welchem in der Zuordnungs-Einheit 10 eine Verknüpfung der Bilddaten 3.1 mit den jeweils dazugehörenden Strecken- bzw. Blickwinkeldaten 5.1, 4.1 in Form einer Kennung vorgenommen wird, um ein strukturiertes Einspeichern der Bilddaten in die Speicher-Einheit 11 zu sichern. Durch das Aufprägen einer Kennung wird jedes Bild dem jeweiligen Standort des Kamera-Systems 2 und dem von der jeweiligen Stellung der Einzelkamera 3 bestimmten Blickwinkel eindeutig zuordnet, so daß bei einem wahlweisen Eingeben von Strecken- bzw. Blickwinkeldaten jeweils die Speicherplätze der dazugehörigen Bilddaten problemlos ermittelbar sind und zur Darstellung eines digitalen, bewegbaren Videobild-Systems verfügbar sind.

Die Speicher-Einheit 11 weist eine Einspeichersteuerung 14 auf, durch welche-entsprechend der Vorgaben des Datenbank-Systems 13 - die Belegung der für die einzelnen Bilddaten der Videosequenzen verfügbaren Speicherplätze in dem Bilddatenspeicher 15 der Speicher-Einheit 11 koordiniert wird. Als Datenträger des Bilddatenspeichers 15 ist ein digitaler, nichtlinearer Wechseldatenträger, beispielsweise eine Compakt-Disk 16, vorgesehen, so daß in vorteilhafter Weise eine Bildwiedergabe unabhängig vom Zeitpunkt bzw. vom Ort der Bildaufzeichnung vorgenommen werden kann.

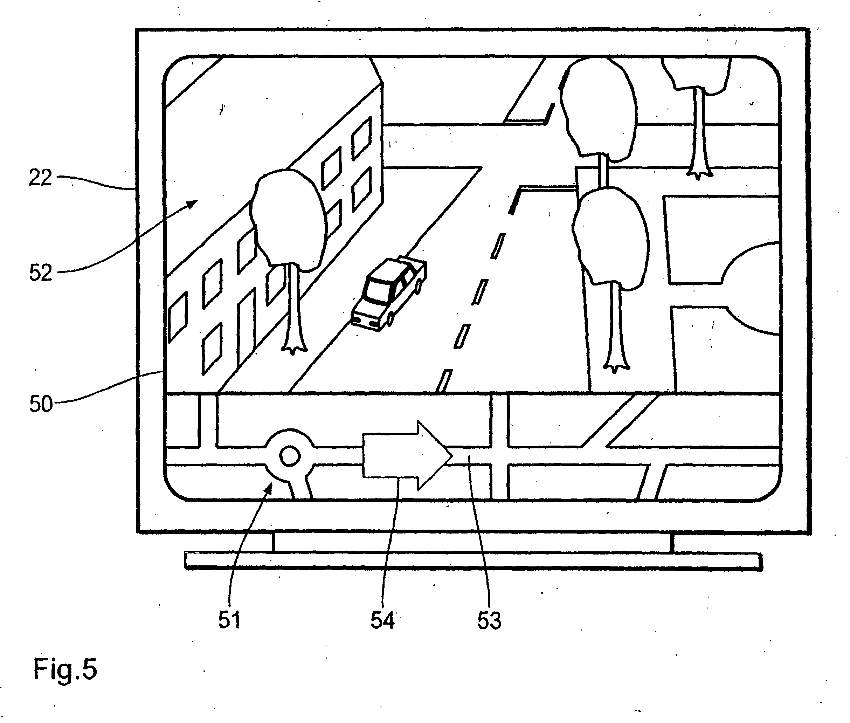

Die in Figur 2 gezeigte Bildwiedergabevorrichtung 20 für ein System zur Darstellung eines digital bewegbaren Videobildes 52 (vgl. Fig. 5) weist eine als Computermaus ausgebildete Eingabe-Einheit 21 auf, durch welche ein Betrachter des auf einem Monitor 22 darstellbaren Videobild-Systems die einer Standort- und Blickwinkelkennung entsprechenden Daten 23 für eine virtuelle, von einem seinerseits gewählten Standort unter einem bestimmten Blickwinkel beginnende Bewegung innerhalb des jeweiligen Videobildes in einen Steuerrechner 24 eingeben kann. Die mit der gewählten Standort- und Blickwinkeleingabe korrespondierende Bewegung der Computermaus 21 wird auf dem zur Bilddarstellung an den Signalausgang des Steuerrechners 24 angeschlossenen Monitor 22 durch ein gesondertes Grafikelement (vergleiche die Ausführungen zu Figur 5) zwecks einer bequemen Kontrolle zur Anzeige gebracht. Der Steuerrechner 24 der Bildwiedergabevorrichtung 20 weist eine Zuordnungs-Einheit 25 und eine Speicher-Einheit 26 auf, deren Arbeitsweise und Zusammenwirken durch das Datenbank-System 13 bestimmt wird. Die Speicher-Einheit 26 ist aus einem Adressenkoordinator 27 und einem Bilddatenspeicher 28 gebildet, in welchen zwecks Bildwiedergabe ein externer Datenträger 16 mit den von der Bildaufnahmevorrichtung 1 aufgezeichneten Bilddaten, bevorzugt eine Compakt-Disk 16, eingelegt wird.

In der Zuordnungs-Einheit 25 wird entsprechend der Zuordnungsvorschriften des Datenbank-Systems 13 der zu jedem eingegebenen Standort und Blickwinkel gebildete Positions- und Blickwinkelkennwert mit den für das digitale Bildsystem verfügbaren, bildbezogenen Kennwerten verglichen. Bei Übereinstimmung wird der Speicherplatz der Bilddaten der dazugehörigen Videosequenz ermittelt und durch den ebenfalls über das Datenbank-System 13 gesteuerten Adressenkoordinator 27 erfolgt eine Aktivierung des Bilddatenspeichers 28 zur Ausgabe der strukturiert gespeicherten Bilddaten 29 an den Monitor 22.

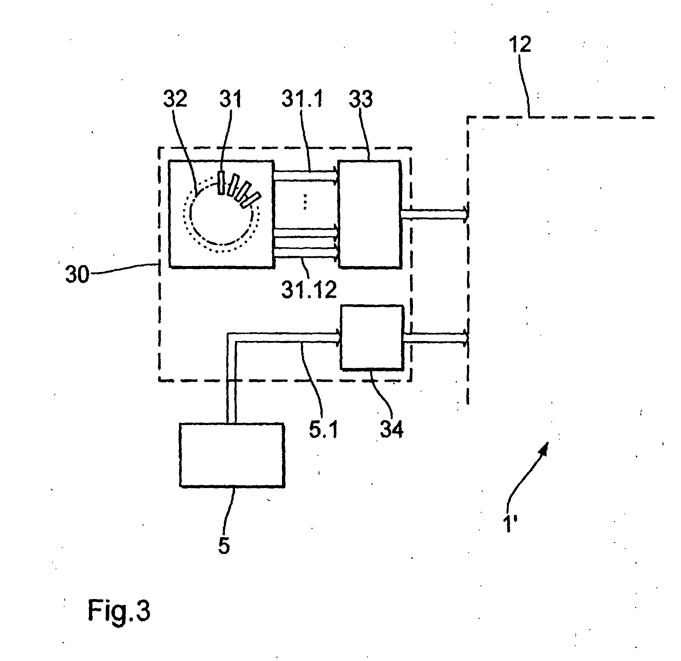

Figur 3 zeigt ein mittels eines Antriebmotors 5 verfahrbares Mehrkamera-System 30 mit vierundzwanzig Videokameras 31 für Bildaufnahmevorrichtung 1', welche in Bezug auf die datenverarbeitenden Einheiten im wesentlichen der in Figur 1 dargestellten Bildaufnahmevorrichtung 1 entspricht.

Die einzelnen Kameras 31 sind auf einem Kreisbogen 32 in gleichmäßigem Abstand in Umfangsrichtung verteilt angeordnet und zeichnen an jedem Standort gleichzeitig Videobilder auf. Jeder Videokameras ist somit ein bestimmter Blickwinkel zugeordnet, durch welchen ein Teilausschnitt des aufzuzeichnenden Rundumbildes kamerabezogen festgelegt ist. Die Bilddaten 31.1 bis 31.12 der einzelnen Videokameras 31 werden ebenso wie die die jeweilige Position des Mehrkamera-Systems 30 charakterisierenden Standortdaten aus einem gesonderten Zwischenspeicher 33, 34 zur weiteren datentechnischen Aufbereitung entsprechend des verwendeten Datenbank-Systems zu der Rechner-Einheit 12 übertragen.

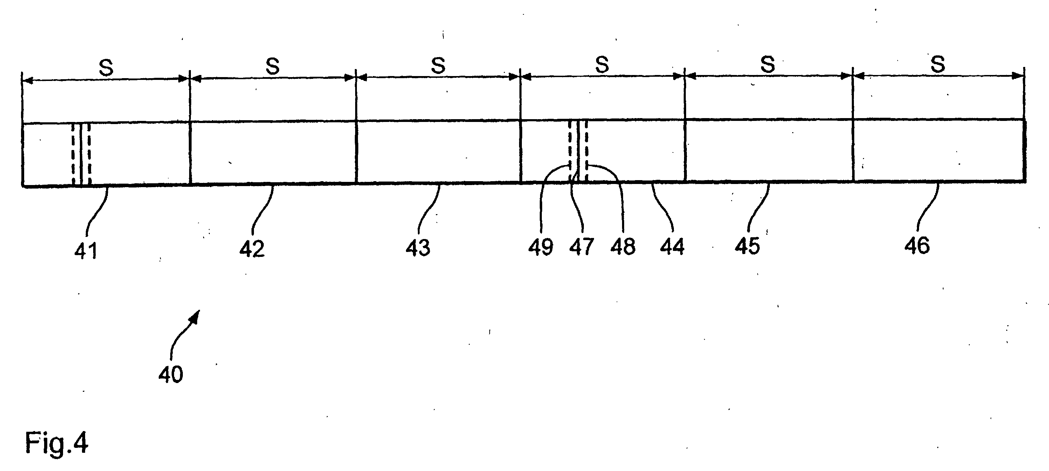

In Figur 4 sind die von den Kameras des Mehrkamera-Systems (vergleiche die Position 31 in Figur 3) jeweils gleichzeitig bei Durchfahren einer Wegstrecke S aufgezeichneten und in einer einzigen Bilddatei 40 gespeicherten Videosequenzen 41, 42, 43, 44, 45, 46 in schematisierter Form dargestellt.

Um bei der Bildwiedergabe in dem Datenbank-System einen sicheren Zugriff auf die jeweiligen Bilddaten zu erreichen, werden in das Datensegment eines bestimmten Bildes 47 zusätzlich die Positionsdaten der von der in Umfangsrichtung jeweils nächstliegenden Kamera des Mehrkamera-Systems aufgenommenen Nachbarbilder 48, 49 aufgenommen. Dadurch ist jedes Bild mit seinen "logischen" Nachbarbildern direkt kombinierbar bzw. zu jedem Bild sind die Positionen der "logischen" Nachbarbilder rekonstruierbar. Die "logische" Nachbarpositionen werden beispielsweise in der Tonspur des Bilddatensegments des jeweiligen Bildes 47 abgespeichert. Bei einem Steuerungseingriff eines das digitale Bildsystem betrachtenden Nutzers zur virtuellen Änderung seines augenblicklichen Standorts durch eine Verschiebung und/oder eine Drehung wird die Position des der Standortänderung entsprechenden neuen Bilddatensegments in der gespeicherten Gesamtdatei aus der Kodierung des "alten" Bilddatensegments ermittelt und dieses neue Bild anschließend dargestellt.

Der in Figur 5 dargestellte Monitor 22 zeigt auf seinem Bildschirm 50 zum einen einen Ausschnitt einer Straßenkarte 51 (Navigationskarte) und zum anderen als Bildausschnitt eine Ansicht 52 einer Straße 53. Die der Ansicht entsprechende Straße und die Blickrichtung, unter welchem ein sich durch den mittels der Straßenkarte 51 dargestellte Bereich eines Stadtgebiet navigierender Betrachter diesen Bildausschnitt sehen würde, ist auf der Straßenkarte 51 durch ein pfeilförmiges Grafikelement 54 bzw. durch die Spitze des Pfeils markiert. Die Bewegung des Pfeils 54 ist durch die Computermaus (vergleiche die Position 21 in Figur 2) bequem steuerbar und entspricht einem virtuellen, durch Drehungen und/oder geradlinige Bewegungen zusammengesetzten Bewegungsablauf eines Betrachters, welcher sich durch den mittels des Videobild-Systems dargestellten Stadtbereich navigiert.

Das Bild 52, welches in beliebig skalierbarer Auflösung auf dem Monitor 22 dargestellt werden kann, folgt nun jeder Bewegung des Pfeils, wobei - bedingt durch die hohe Verarbeitungsgeschwindigkeit in dem Steuerrechner (vergleiche die Position 24 in Figur 2) - die der jeweiligen Pfeilposition entsprechenden neuen Bilder übergangslos, d.h. ohne ruck- oder sprungartige Bildbewegung, frei und detailgetreu dargestellt werden können.

Mit einem Mehrkamera-System 20, welches als Prototyp mit zwölf Videokameras bestückt ist, konnte bereits bei einer Bild-Digitalisierung von 320 X 240 Pixeln eine befriedigende Bildqualität bei der Bildwiedergabe erreicht werden. Für eine bei der Aufnahme der Videosequenzen mit dem Mehrkamera-System zurückgelegte Wegstrecke von etwa 200 Metern mußte lediglich ein Datenvolumen von ca. 150 MB verarbeitet werden. Bei Zugrundelegen einer solchen Datenmenge fällt bei einer Verdoppelung der Anzahl der Kameras des Mehrkammera-Systems und einer bei der Bildaufnahme zurückgelegten Wegstrecke von 400 Metern ein Datenvolumen an, welches sich bequem auf einer normalen Compakt-Disk (CD) abspeichern läßt. Die Speicherkapazität der CD ist auch noch ausreichend, um bei Verwendung eines bildschirmfüllenden, etwa die vierfache Datenmenge erfordernden Fernsehbildformats die bei Zurücklegen von etwa 100 Metern aufgezeichneten Videosequenzen abzuspeichern. Bei Anwendung der nicht-linearen DVD-Speichertechnik sind auf einem DVD-Aufzeichnungsträger derzeit bis zu 6 GByte speicherbar, so daß bei bester Bildqualität mit dem erfindungsgemäßen Verfahren die Bilddaten der Videosequenzen gespeichert werden können, welche die Kameras des Mehrkamera-Systems bei etwa 800 Meter durchfahrener Wegstrecke aufzeichnen.

Die Erfindung beschränkt sich in ihrer Ausführung nicht auf die vorstehend angegebenen bevorzugten Ausführungsbeispiele.

## Patentansprüche

1. System (1; 1'; 20) zum Aufzeichnen und Wiedergeben von Bildern (47, 48, 49) aus Videosequenzen (41-46) zwecks Darstellung in einem digitalen Videobild-System, enthaltend:
- eine Bildaufzeichnungsvorrichtung (1; 1'), die aufweist:
- ein Kamera-System (2, 30) zum Aufzeichnen von realen Bildern (47, 48, 49) der Videosequenzen (41-46) an einem Standort unter jeweils geändertem Blickwinkel in zumindest einer horizontalen Ebene über 360° an aufeinanderfolgende Standorten aufgezeichnet werden,
- eine Zuordnungs-Einheit (10), in welcher den Daten eines jeden aufgezeichneten Bildes (47, 48, 49) der Videosequenzen (41-46) eine dem Standort entsprechende Ortskoordinaten-Kennung und eine der Stellung des Kamera-Systems an diesem Standort entsprechende Blickwinkel-Kennung zugeordnet wird,
- eine Speicher-Einheit (11), in welcher die mit einer Ortskoordinatenund Blickwinkel-Kennung versehenen Daten der aufgezeichneten Bilder (47, 48, 49) zusammen mit den Positionsdaten der in der zumindest horizontalen Ebene in Umfangsrichtung nächstliegenden Kamerapositionen eingespeichert werden, und
- einen aus der Zuordnungs-Einheit (10) und der Speicher-Einheit (11) gebildeten Steuerrechner (12) mit einem die Zuordnungs-Einheit (10) steuernden und die Dateneingabe in die Speicher-Einheit (11) koordinierenden Datenbank-System (13) zur strukturlerten Verwaltung der die aufgezeichneten Bilder (47, 48, 49) der Videosequenzen (41-46) enthaltenden Daten, und
- eine Bildwiedergabevorrichtung (20) zum Wiedergeben der Daten von den mittels der Bildaufzeichnungsvorrichtung (1) aufgezeichneten Bildern (47, 48, 49) der Videosequenzen (41-46), die aufweist:
- eine Eingabe-Einheit (21) zum Wählen eines Standortes und/oder eines Blickwinkels zwecks Wiedergabe zumindest der Daten eines oder mehrerer aufgezeichneter Bilder (47, 48, 49) aus der entsprechenden Videosequenz (41-46), eine Speicher-Einheit (26), aus welcher die unter Berücksichtigung der Ortskoordinaten- und Blickwinkel-Kennung sowie der Positionsdaten der in der zumindest horizontalen Ebene in Umfangsrichtung nächstliegenden Kamerapositionen strukturiert gespeicherten Daten der aufgezeichneten Bilder (47, 48, 49) auslesbar sind,
- eine Zuordnungs-Einheit (25), in welcher für eine mit der Eingabe-Einheit (21) eingegebene Ortskoordinaten- und Blickwinkel-Eingabe der Speicherplatz der Daten der entsprechenden Videosequenzen (41-46) in der Speicher-Einheit (26) ermittelbar ist,
- einen aus der Zuordnungs-Einheit (25) und der Speicher-Einheit (26) gebildeten Steuerrechner mit einem die Zuordnungs-Einheit (25) steuemden und das Auslesen der Daten aus der Speicher-Einheit (26) koordinierenden Datenbank-System (13) zur strukturierten Verwaltung der die aufgezeichneten Bilder (47, 48, 49) der Videosequenzen (41-46) enthaltenden Daten, und
- eine Bildwiedergabe-Einrichtung (22) zur Darstellung der mittels der Eingabe-Einheit (21) bestimmten und aus der Speicher-Einheit (26) ausgelesenen Daten der Bilder (47, 48, 49) der jeweiligen Videosequenz (41-46).

2. System nach Anspruch 1,
**dadurch gekennzeichnet, dass** für die Bildaufzeichnungsvorrichtung (1; 1') und für die Bildwiedergabevorrichtung (20) das gleiche Datenbank-System (13) zur Verwaltung der Daten der aufgezeichneten Bilder (47, 48, 49) vorgesehen ist.

3. Vorrichtung (1; 1') zum Aufzeichnen von Bildern in Videosequenzen für ein Aufzeichnungs- und Wiedergabe-System nach Anspruch 1 oder 2, enthaltend:
- ein Kamera-System (2, 30) zum Aufzeichnen von realen Bildern (47, 48, 49) der Videosequenzen (41-46) an einem Standort unter jeweils geändertem Blickwinkel in zumindest einer horizontalen Ebene über 360° an aufeinanderfolgenden Standorten aufgezeichnet werden,
- eine Zuordnungs-Einheit (10), in welcher den Daten eines jeden aufgezeichneten Bildes (47, 48, 49) der Videosequenzen (41-46) eine dem Standort entsprechende Ortskoordinaten-Kennung und eine der Stellung des Kamera-Systems an diesem Standort entsprechende Blickwinkel-Kennung zugeordnet wird,
- eine Speicher-Einheit (11), in welche die mit einer Ortskoordinaten- und Blickwinkel-Kennung versehenen Daten der aufgezeichneten Bilder (47, 48, 49) zusammen mit Positionsdaten der in der zumindest einen horizontalen Ebene in Umfangsrichtung nächstliegenden Kamerapositionen eingespeichert werden, und
- einen aus der Zuordnungs-Einheit (10) und der Speicher-Einheit (11) gebildeten Steuerrechner (12) mit einem die Zuordnungs-Einheit (10) steuernden und die Dateneingabe in die Speicher-Einheit (11) koordinierenden Datenbank-System (13) zur strukturierten Verwaltung der die aufgezeichneten Bilder (47, 48, 49) der Videosequenzen (41-46) enthaltenden Daten.

4. Vorrichtung (20) zum Wiedergeben von Daten von aufgezeichneten Bildern (47, 48, 49) von Videosequenzen (41-46) für ein Aufzeichnungs- und Wiedergabe-System nach Anspruch 1 oder 2, enthaltend:
- eine Eingabe-Einheit (21) zum Wählen eines Standortes und/oder eines Blickwinkels zwecks Wiedergabe der Daten eines oder mehrerer aufgezeichneter Bilder (47, 48, 49) aus der entsprechenden Videosequenz (41-46),
- eine Speicher-Einheit (26), aus welcher die unter Berücksichtigung der Ortskoordinaten- und Blickwinkel-Kennung sowie der Positionsdaten der in der zumindest horizontalen Ebene in Umfangsrichtung nächstliegenden Kamerapositionen strukturiert gespeicherten Daten der aufgezeichneten Bilder (47, 48, 49) auslesbar sind,
- eine Zuordnungs-Einheit (25), in welcher für eine mit der Eingabe-Einheit (21) eingegebene Ortskoordinaten- und Blickwinkel-Eingabe der Speicherplatz der Daten der entsprechenden Videosequenzen (41-46) in der Speicher-Einheit (26) ermittelbar ist,
- einen aus der Zuordnungs-Einheit (25) und der Speicher-Einheit (26) gebildeten Steuerrechner mit einem die Zuordnungs-Einheit (25) steuemden und das Auslesen der Bilddaten aus der Speicher-Einheit (26) koordinierenden Datenbank-System (13) zur strukturierten Verwaltung der die aufgezeichneten Bilder (47, 48, 49) der Videosequenzen (41-46) enthaltenden Daten, und
- eine Bildwiedergabe-Einrichtung (22) zur Darstellung der mittels der Eingabe-Einheit (21) bestimmten und aus der Speicher-Einheit (26) ausgelesenen Daten der Bilder (47, 48, 49) der jeweiligen Videosequenz (41-46).

5. Vorrichtung nach Anspruch 3,
**dadurch gekennzeichnet, dass** für das Kamera-System (2, 30) ein Antrieb vorgesehen ist, durch welchen das Kamera-System bei der Bildaufnahme im wesentlichen linear und mit einer konstanten Geschwindigkeit verschoben wird.

6. Vorrichtung nach einem der Ansprüche 3 bis 5,
**dadurch gekennzeichnet, dass** in den Speicher-Einheiten (11; 26) Mittel zum Datenein- und Datenaustrag auf einen bzw. von einem Datenträger (16), insbesondere einem nicht-linearen Speichermedium vorgesehen sind.

7. Verfahren zum Aufnehmen und Wiedergeben von Bildern aus Videosequenzen zur Darstellung in einem digitalen Bildsystem, enthaltend die folgenden Schritte:
- Aufnehmen der Bilder bei gleichzeitigem Aufzeichnen einer Kennung für die Ortskoordinate und für den Blickwinkel durch ein Kamera-System an einem Standort in zumindest einer horizontalen Ebene über 360° an jeweils nacheinander einzunehmenden Standorten,
- strukturiertes Speichem der mit einer Standort- und Blickwinkel-Kennung sowie mit dem Positionsdaten der in der zumindest horizontalen Ebene in Umfangsrichtung nächstliegenden Kamerapositionen versehenen Daten der aufgezeichneten Bilder der Videosequenzen und deren Verwaltung mittels eines Datenbank-Systems, und
- Wiedergeben der Daten aus den strukturiert gespeicherten Videosequenzen in Abhängigkeit von einem Standort und einem an diesem Standort vorgebbaren Blickwinkel.

8. Verfahren nach Anspruch 7,
**dadurch gekennzeichnet, dass** die Daten der aufgezeichneten Bilder der Videosequenzen beim Speichern zu einer einzigen Videodatei zusammengefügt werden.

9. Verfahren nach Anspruch 7 oder 8,
**dadurch gekennzeichnet, dass** bei der Bildwiedergabe durch das Datenbank-System eine Datenverwaltung derart vorgenommen wird, dass jedes Einzelbild mit seinen logischen Nachbarbildem direkt kombinierbar ist und zu jedem Einzelbild die Position seiner logischen Nachbarbilder rekonstruiert werden kann.

10. Verfahren nach einem der Ansprüche 7 bis 9,
**dadurch gekennzeichnet, dass** zur manuellen Steuerung der Wiedergabe der Daten der aufgezeichneten Bilder ein Wegeplan verwendet wird, welcher die Streckenführung des Kamera-Systems bei der Bildaufnahme aufweist.

## Claims

1. A system (1; 1'; 20) for recording and reproducing images (47, 48, 49) from video sequences (41-46) for the purposes of representation in a digital video image system, including:
- an image recording apparatus (1; 1') which has:
- a camera system (2; 30) for recording real images (47, 48, 49) of the video sequences (41-46) at a location at a respectively altered view angle in at least one horizontal plane over 360° at successive locations,
- an allocation unit (10) for associating with the data of each recorded image (47, 48, 49) of the video sequences (41-46) a location co-ordinate identification corresponding to the location and a view angle identification corresponding to the position of the camera system at said location,
- a storage unit (11) in which the data of the recorded images (47, 48, 49), provided with location co-ordinate and view angle identification; are stored together with the position data of the camera positions nearest in the at least one horizontal plane in the peripheral direction, and
- a control computer (12) formed from the allocation unit (10) and the storage unit (11), with a database system (13) controlling the allocation unit (10) and co-ordinating the data input into the storage unit (11) for structured management of the data containing the recorded images (47, 48, 49) of the video sequences (41-46), and
- an image reproduction apparatus (20) for reproducing the data of images (47, 48, 49) of the video sequences (41-46), which are recorded by means of the image recording apparatus (1), which has:
- an input unit (21) for selecting a location and/or a view angle for the purposes of reproduction at least of the data of one or more recorded images (47, 48, 49) from the corresponding video sequence (41-46),
- a storage unit (26) from which the data of the recorded images (47, 48, 49), which are structuredly stored having regard to the location co-ordinate and view angle identification and the position data of the camera positions nearest in the at least horizontal plane in the peripheral direction, can be read out,
- an allocation unit (25) in which for a location co-ordinate and view angle input which is inputted with the input unit (21) the storage location of the data of the corresponding video sequences (41-46) in the storage unit (26) can be ascertained,
- a control computer formed from the allocation unit (25) and the storage unit (26) with a database system (13) for controlling the allocation unit (25) and co-ordinating reading-out of the data out of the storage unit (26) for structured management of the data containing the recorded images (47, 48, 49) of the video sequences (41-46), and
- an image reproduction device (22) for representation of the data of the images (47, 48, 49) of the respective video sequence (41-46), said data being determined by means of the input unit (21) and read out of the storage unit (26).

2. A system according to claim 1 **characterised in that** the same database system (13) is provided for the image recording apparatus (1; 1') and for the image reproduction apparatus (20), for management of the data of the recorded images (47, 48, 49).

3. Apparatus (1; 1') for recording images in video sequences for a recording and reproducing system according to claim 1 or claim 2 including:
- a camera system (2; 30) for recording real images (47, 48, 49) of the video sequences (41-46) at a location at a respectively altered view angle in at least one horizontal plane over 360° at successive locations,
- an allocation unit (10) for associating with the data of each recorded image (47, 48, 49) of the video sequences (41-46) a location co-ordinate identification corresponding to the location and a view angle identification corresponding to the position of the camera system at said location,
- a storage unit (11) in which the data of the recorded images (47, 48, 49), provided with location co-ordinate and view angle identification, are stored together with the position data of the camera positions nearest in the at least one horizontal plane in the peripheral direction, and
- a control computer (12) formed from the allocation unit (10) and the storage unit (11), with a database system (13) controlling the allocation unit (10) and co-ordinating the data input into the storage unit (11) for structured management of the data containing the recorded images (47, 48, 49) of the video sequences (41-46).

4. Apparatus (20) for reproducing data of recorded images (47, 48, 49) of video sequences (41-46) for a recording and reproducing system according to claim 1 or claim 2, including:
- an input unit (21) for selecting a location and/or a view angle for the purposes of reproduction at least of the data of one or more recorded images (47, 48, 49) from the corresponding video sequence (41-46),
- a storage unit (26) from which the data of the recorded images (47, 48, 49), which are structuredly stored having regard to the location co-ordinate and view angle identification and the position data of the camera positions nearest in the at least horizontal plane in the peripheral direction, can be read out,
- an allocation unit (25) in which for a location co-ordinate and view angle input which is inputted with the input unit (21) the storage location of the data of the corresponding video sequences (41-46) in the storage unit (26) can be ascertained,
- a control computer formed from the allocation unit (25) and the storage unit (26) with a database system (13) for controlling the allocation unit (25) and co-ordinating reading-out of the data out of the storage unit (26) for structured management of the data containing the recorded images (47, 48, 49) of the video sequences (41-46), and
- an image reproduction device (22) for representation of the data of the images (47, 48, 49) of the respective video sequence (41-46), said data being determined by means of the input unit (21) and read out of the storage unit (26).

5. Apparatus according to claim 3 **characterised in that** provided for the camera system (2, 30) is a drive by which the camera system in image recording is displaced substantially linearly and at a constant speed.

6. Apparatus according to one of claims 3 to 5 **characterised in that** provided in the storage units (11; 26) are means for data input and data output on to and from a data carrier (16), in particular a non-linear storage medium.

7. A method of recording and reproducing images of video sequences for representation in a digital image system, including the following steps:
- recording the images with simultaneous recording of an identification for the location co-ordinates and for the view angle by a camera system at a location in at least one horizontal plane over 360° at locations which are to be respectively successively occupied,
- structured storage of the data of the recorded images of the video sequences, which are provided with a location and view angle identification and with the position data of the camera positions nearest in the at least horizontal plane in the peripheral direction, and management thereof by means of a database system, and
- reproducing the data from the structuredly stored video sequences in dependence on a location and a view angle which can be predetermined at said location.

8. A method according to claim 7 **characterised in that** the data of the recorded images of the video sequences are assembled upon storage to form a single video file.

9. A method according to claim 7 or claim 8 **characterised in that** data management is implemented upon image reproduction by the database system in such a way that each individual image can be directly combined with its logical neighbour images and the position of its logical neighbour images can be reconstructed in relation to each individual image.

10. A method according to one of claims 7 to 9 **characterised in that** for manual control of reproduction of the data of the recorded images a path plan is used which has the path guidance for the camera system in the image recording procedure.

## Revendications

1. Système (1, 1', 20) pour enregistrer et pour reproduire des images (47, 48, 49) de séquences vidéo (41-46) pour une représentation dans un système digital d'images vidéo comprenant :
- un dispositif d'enregistrement d'images (1, 1') avec
- un système de caméras (2, 30) pour enregistrer des images réelles (47, 48, 49) des séquences vidéo (41-46) sur un site sous un angle de visée respectivement modifié dans au moins un plan horizontal sur 360° sur des sites consécutifs,
- une unité d'attribution (10), dans laquelle une identification des coordonnées locales correspondant au site et une identification de l'angle de visée correspondant à la position du système de caméras sur ce site sont attribuées aux données de chaque image enregistrée (47, 48, 49) des séquences vidéo (41-46),
- une unité de mémorisation (11), dans laquelle les données des images enregistrées (47, 48, 49) munies d'une identification de coordonnées locales et d'angles de visée sont enregistrées en même temps que les données de positions des positions des caméras se trouvant les plus proches en direction périphérique dans au moins un plan horizontal, et
- un calculateur de commande (12) formé par l'unité d'attribution (10) et par l'unité de mémorisation (11) avec un système de banque de données (13) commandant l'unité d'attribution (10) et coordonnant l'entrée des données dans l'unité de mémorisation (11), qui sert à la gestion structurée des données contenant les images enregistrées (47, 48, 49) des séquences vidéo (41-46), et
- un dispositif de reproduction d'images (20) pour reproduire les données des images (47, 48, 49) des séquences vidéo (41-46) enregistrées à l'aide du dispositif d'enregistrement d'images (1) avec
- une unité d'entrée (21) pour sélectionner un site et/ou un angle de visée dans le but de reproduire au moins les données d'une ou de plusieurs images enregistrées (47, 48, 49) à partir de la séquence vidéo (41-46) correspondante,
- une unité de mémorisation (26), à partir de laquelle peuvent être lues les données mémorisées de manière structurée des images enregistrées (47, 48, 49) en tenant compte de l'identification de coordonnées locales et d'angles de visée ainsi que des données de positions des positions des caméras se trouvant les plus proches en direction périphérique dans au moins un plan horizontal,
- une unité d'attribution (25) dans laquelle il est possible, pour une entrée des données de coordonnées de site et d'angles de visée réalisée avec l'unité d'entrée (21), de déterminer l'adresse de mémoire des données des séquences vidéo correspondantes (41-46) dans l'unité de mémorisation (26),
- un calculateur de commande formé par l'unité d'attribution (25) et par l'unité de mémorisation (26) avec un système de banque de données (13) commandant l'unité d'attribution (25) et coordonnant la lecture des données dans l'unité de mémorisation (26), qui sert à la gestion structurée des données contenant les images enregistrées (47, 48, 49) des séquences vidéo (41-46), et
- un dispositif de reproduction d'images (22) pour représenter les données des images (47, 48, 49) de la séquence vidéo respective (41-46), qui sont définies à l'aide de l'unité d'entrée (21) et qui sont lues dans l'unité de mémorisation (26).

2. Système selon la revendication 1, **caractérisé en ce que** le même système de banque de données (13) pour la gestion des données des images enregistrées (47, 48, 49) est prévu pour le dispositif d'enregistrement d'images (1, 1') et pour le dispositif de reproduction d'images (20).

3. Dispositif (1, 1') pour enregistrer des images en séquences vidéo pour un système d'enregistrement et de reproduction selon la revendication 1 ou 2 comprenant :
- un système de caméras (2, 30) pour enregistrer des images réelles (47, 48, 49) des séquences vidéo (41-46) sur un site sous un angle de visée respectivement modifié dans au moins un plan horizontal sur 360° sur des sites consécutifs,
- une unité d'attribution (10), dans laquelle une identification des coordonnées locales correspondant au site et une identification de l'angle de visée correspondant à la position du système de caméras sur ce site sont attribuées aux données de chaque image enregistrée (47, 48, 49) des séquences vidéo (41-46),
- une unité de mémorisation (11), dans laquelle les données des images enregistrées (47, 48, 49) munies d'une identification de coordonnées locales et d'angles de visée sont enregistrées en même temps que des données de positions des positions des caméras se trouvant les plus proches en direction périphérique dans au moins un plan horizontal, et
- un calculateur de commande (12) formé par l'unité d'attribution (10) et par l'unité de mémorisation (11) avec un système de banque de données (13) commandant l'unité d'attribution (10) et coordonnant l'entrée des données dans l'unité de mémorisation (11), qui sert à la gestion structurée des données contenant les images enregistrées (47, 48, 49) des séquences vidéo (41-46).

4. Dispositif (20) pour reproduire des données d'images enregistrées (47, 48, 49) de séquences vidéo (41-46) pour un système d'enregistrement et de reproduction selon la revendication 1 ou 2 comprenant :
- une unité d'entrée (21) pour sélectionner un site et/ou un angle de visée dans le but de reproduire les données d'une ou de plusieurs images enregistrées (47, 48, 49) à partir de la séquence vidéo (41-46) correspondante,
- une unité de mémorisation (26), à partir de laquelle peuvent être lues les données mémorisées de manière structurée des images enregistrées (47, 48, 49) en tenant compte de l'identification de coordonnées locales et d'angles de visée ainsi que des données de positions des positions des caméras se trouvant les plus proches en direction périphérique dans le plan au moins horizontal,
- une unité d'attribution (25) dans laquelle il est possible, pour une entrée des données de coordonnées de site et d'angles de visée réalisée avec l'unité d'entrée (21), de déterminer l'adresse de mémoire des données des séquences vidéo correspondantes (41-46) dans l'unité de mémorisation (26),
- un calculateur de commande formé par l'unité d'attribution (25) et par l'unité de mémorisation (26) avec un système de banque de données (13) commandant l'unité d'attribution (25) et coordonnant la lecture des données d'images dans l'unité de mémorisation (26), qui sert à la gestion structurée des données contenant les images enregistrées (47, 48, 49) des séquences vidéo (41-46), et
- un dispositif de reproduction d'images (22) pour représenter les données des images (47, 48, 49) de la séquence vidéo respective (41-46), qui sont définies à l'aide de l'unité d'entrée (21) et qui sont lues dans l'unité de mémorisation (26).

5. Dispositif selon la revendication 3, **caractérisé en ce qu'**un système d'entraînement, avec lequel le système de caméras est déplacé sensiblement dans le sens linéaire et à une vitesse constante lors des enregistrements d'images, est prévu pour le système de caméras (2, 30).

6. Dispositif selon l'une quelconque des revendications 3 à 5, **caractérisé en ce que** dans les unités de mémorisation (11, 26) sont prévus des moyens pour assurer l'entrée de données sur un support de données (16) ou la sortie de données hors de ce support de données, en particulier un support d'information non linéaire.

7. Procédé pour enregistrer et pour reproduire des images de séquences vidéo pour une représentation dans un système digital d'images comprenant les étapes suivantes :
- enregistrement des images et enregistrement simultané d'une identification pour les coordonnées locales et pour l'angle de visée par un système de caméras sur un site dans au moins un plan horizontal sur 360° sur des sites à occuper respectivement de manière consécutive,
- enregistrement structuré des données des images enregistrées des séquences vidéo, qui sont munies d'une identification de site et d'angle de visée ainsi que des données de positions des positions des caméras se trouvant les plus proches en direction périphérique dans le plan au moins horizontal, et gestion de ces données à l'aide d'un système de banque de données, et
- reproduction des données à partir des séquences vidéo mémorisées de manière structurée en fonction d'un site et d'un angle de visée pouvant être imposé sur ce site.

8. Procédé selon la revendication 7, **caractérisé en ce que**, lors de la mémorisation, les données des images enregistrées des séquences vidéo sont rassemblées en un seul fichier vidéo.

9. Procédé selon la revendication 7 ou 8, **caractérisé en ce que**, lors de la reproduction des images par le système de banque de données, une gestion des données a lieu de telle manière que chaque image individuelle peut être combinée directement avec ses images logiques voisines et que pour chaque image individuelle il est possible de reconstruire la position de ses images logiques voisines.

10. Procédé selon l'une quelconque des revendications 7 à 9, **caractérisé en ce qu'**un plan de trajet est utilisé pour la commande manuelle de la reproduction des données des images enregistrées, ce plan de trajet comprenant la conduite du trajet emprunté par le système de caméras lors de l'enregistrement des images.
